# EUROPÄISCHE PATENTSCHRIFT

(11) **EP 2 701 832 B1**
(45) Veröffentlichungstag und Bekanntmachung des Hinweises auf die Patenterteilung: **04.03.2015**
(21) Anmeldenummer: 12727269.8
(22) Anmeldetag: 27.04.2012
(51) Int. Cl.: B01F 3/04, B01F 3/22, B01F 5/04, F04F 5/04, C02F 1/20, C02F 1/74, C02F 3/12, F04F 5/46, C02F 1/72, C02F 101/20, C02F 103/06

(54) **VERFAHREN UND VORRICHTUNG ZUR ANREICHERUNG EINER FLÜSSIGKEIT MIT SAUERSTOFF**
METHOD AND DEVICE FOR ENRICHING A LIQUID WITH OXYGEN
PROCÉDÉ ET DISPOSITIF D'ENRICHISSEMENT D'UN LIQUIDE EN OXYGÈNE

(30) Priorität: 28.04.2011 DE 102011017739
(43) Veröffentlichungstag der Anmeldung: 05.03.2014
(73) Patentinhaber: Würdig, Uwe, 13086 Berlin (DE)
(72) Erfinder: Würdig, Uwe, 13086 Berlin (DE)
(74) Vertreter: Brandt & Nern Patentanwälte
(86) Internationale Anmeldenummer: PCT/DE2012/100120
(87) Internationale Veröffentlichungsnummer: WO 2012/146241

(56) Entgegenhaltungen:
- EP-A2- 0 302 708
- WO-A2-2008/047244
- DE-A1- 10 327 350
- JP-A- 10 151 471
- US-A1- 2004 217 068
- US-B1- 6 193 893
- US-B1- 6 361 697

## Beschreibung

Die Erfindung bezieht sich auf eine Lösung zur optimalen und kontrollierten Anreicherung einer Flüssigkeit mit Sauerstoff, insbesondere Luftsauerstoff. Sie bezieht sich vorzugsweise auf die Anreicherung von Wasser mit Sauerstoff. Gegenstand der Erfindung sind dabei ein entsprechendes Verfahren und eine zur Umsetzung des Verfahrens ausgebildete Vorrichtung.

Für unterschiedliche Einsatzzwecke ist es erforderlich, Flüssigkeiten mit Gas oder Gasgemisch anzureichern, indem dieses kontrolliert in die jeweilige Flüssigkeit eingetragen und in dieser gelöst wird. Beispielsweise ist es gebräuchlich, Wasser, insbesondere Grundwasser, zum Zweck der Enteisenung mit Sauerstoff anzureichern. Daher wurde in der Vergangenheit bereits eine Mehrzahl von Lösungen für den Eintrag von Gas in Flüssigkeiten vorgeschlagen.

So ist es zum Beispiel bekannt, Gas in Wasser mittels einer so genannten Wasserstrahlpumpe einzubringen, wie sie beispielsweise in der CH 85932 A oder in der DE 1 022 471 B beschrieben wird, wobei die in der letztgenannten Druckschrift beschriebene Wasserstrahlpumpe der Anreicherung von Wasser mit Luftsauerstoff dient.

Ferner ist es bekannt, Gas mittels Injektoren in eine Flüssigkeit einzubringen, bei denen die Flüssigkeit unter Nutzung des Venturi-Prinzips durch einen rohrförmigen Strömungskanal mit einem sich in seinem Querschnitt verengenden Abschnitt strömt. In den sich verengenden Abschnitt mündet ein sich zur Zuführung des Gases quer zu dem Strömungskanal erstreckender Stutzen oder Rohrabschnitt, in welchem durch die aufgrund der Verengung mit einem hohen dynamischen Druck vorbeiströmende Flüssigkeit einen Unterdruck entsteht. Durch die damit verbundene Sogwirkung wird das Gas in den Strömungskanal gesaugt, von der Flüssigkeit mitgerissen und zu einem großen Teil in der Flüssigkeit gelöst.

Ein entsprechender Injektor wird beispielsweise in der US 4,123,800 A beschrieben.

Zwar sind derartige Injektoren sehr effektiv, so dass sie eine hochgradige Anreicherung der Flüssigkeit mit dem jeweiligen Gas ermöglichen, jedoch ist eine vollständige Lösung des Gases in der Flüssigkeit nicht zu erreichen, so dass ein Teil des im Bereich des Injektors eingebrachten Gases durch die Flüssigkeit insbesondere unter Bildung größerer Blasen in ungelöster Form mitgeführt wird. Dies ist jedoch insoweit unerwünscht, als hierdurch in den nachfolgenden Einheiten, wie beispielsweis den Einheiten eines Wasserversorgungsnetzes Druckstöße entstehen können. Derartige Druckstöße führen zum Beispiel in Pumpen zu Kavitationen, in deren Folge die Pumpen beschädigt oder gar zerstört werden können. Vorzugsweise werden daher Maßnahmen ergriffen, um Gas oder Gasgemisch, welches im Zuge der Anreicherung in eine Flüssigkeit gelangt, dort aber nicht gelöst wird, wieder von der Flüssigkeit zu trennen. Hierzu dienen so genannte Entgaser beziehungsweise Entgasungseinheiten. So ist beispielsweise aus der EP 07 71 230 B1 eine Vorrichtung bekannt, bei welcher eine Flüssigkeit in einem Injektor mit Gas angereichert wird und das in der Flüssigkeit nicht in Lösung gehende Gas mittels eines dem Injektor nachgeordneten Entgasers beziehungsweise Flüssigkeits-Gas-Separators wieder von der Flüssigkeit abgetrennt wird. Das solchermaßen abgetrennte Gas wird in die Atmosphäre abgeblasen. Bei der in der Schrift beschriebenen Lösung werden zur Anreicherung der Flüssigkeit reiner Sauerstoff oder Ozon aus einem entsprechenden Gasvorrat in den Injektor injiziert. Laut der Schrift ist es dabei mit dem beschriebenen System möglich, im Falle einer Verwendung von reinem Sauerstoff 85 % des zugeführten Sauerstoffes in die Flüssigkeit zu übertragen.

Eine ähnliche Lösung offenbart die US 2004/0217068 A1, welche ein Verfahren und ein System zur Behandlung von Wasser betrifft. Entsprechend dieser Lösung werden mittels eines Injektors gasförmige Reagenzien, wie insbesondere Ozon, aus einer Quelle an einer Ansaugöffnung des Injektors in das Wasser eingetragen. Der Eintrag des oder der Gase erfolgt, in bekannter Weise, unter Nutzung des von dem den Injektor durchströmenden Wasser an der Ansaugöffnung erzeugten Unterdrucks. Mittels einer dem Injektor nachgeschalteten Pumpe, welche das mit Gas angereicherte Wasser verwirbelt und einer nachfolgenden, mit einer Mixeinheit ausgestatteten Entgasungseinrichtung, in welcher das Wasser unter Erhöhung seiner Verweildauer in einen engeren Kontakt mit bis dahin ungelösten Blasen von Gas gelangt, wird der in dem Wasser gelöste Gasanteil gezielt erhöht. Die restlichen, nicht in Lösung gehenden Gasanteile werden auch bei dieser Lösung in die Atmosphäre ausgetragen.

Aus der EP 1 423 182 B1 sind ein Verfahren und ein System beziehungsweise eine Vorrichtung zur Lösung von Gas in einer Flüssigkeit bekannt, wobei die mit dem entsprechenden Gas angereicherte Flüssigkeit in einen Tank, beispielsweise in einen Behälter zur Fischzucht ausgetragen wird. Das in der Flüssigkeit zu lösende Gas wird dabei über einen Injektor einem Mischer zugeführt, in welchen auch die mit dem Gas anzureichernde Flüssigkeit eingeleitet wird. In einem dem Mischer nachgeordneten Abscheider wird ungelöstes Gas von der Flüssigkeit getrennt und das Gas über den vorgenannten Injektor erneut der Flüssigkeit zugeführt. Die den Abscheider passierende Flüssigkeit mit darin gelöstem Gas wird in den schon genannten Tank ausgeleitet. Die Vorrichtung ist vorzugsweise für den Eintrag reiner Gase, wie beispielsweise Sauerstoff, ausgebildet.

Zwar wird in der Druckschrift ausgeführt, dass mittels der Vorrichtung auch Gasgemische, wie Luft, in einer Flüssigkeit, wie beispielsweise Wasser gelöst werden könnten, jedoch ist die Vorrichtung im Zusammenhang damit allenfalls für den Austrag der mit Gas oder Gasgemisch angereicherten Flüssigkeit in den schon erwähnten Tank, jedoch eher nicht beziehungsweise im Einzelfalle gar nicht als Teil druckbehafteter Systeme für einen Flüssigkeitstransport einsetzbar. Grund hierfür ist, dass in dem Abscheider keine tatsächliche Gasabscheidung, aber jedenfalls keine Trennung ungelöster, weil schwer löslicher Gasanteile, wie etwa in der Luft enthaltenen Stickstoffs, von dem Gas-Flüssigkeitsgemisch mit gelösten und ungelösten Gasen erfolgt. Vielmehr werden im Falle eines Primäreintrags von Luft beziehungsweise Umgebungsluft sowohl ungelöste Sauerstoffanteile als auch ungelöster, in der Luft in wesentlich höherer Konzentration als Sauerstoff vorhandener sowie - da schwer löslich - zum größten Teil ungelöster Stickstoff zusammen aus dem Abscheider über den Injektor in den Mischer zurückgeführt. Sofern nun gleichzeitig ein weiterer Primäreintrag von Luft in den Mischer erfolgt, hat dies zur Folge, dass sich in einem Dom oberhalb des Flüssigkeitsspiegels in dem nachgeordneten Abscheider immer größere Mengen Gases ansammeln. Dem wiederum folgend sind bezüglich der durch die Vorrichtung geleiteten Flüssigkeit wiederholte Strömungsabrisse zu erwarten, wobei sich in der Verbindungsleitung zu dem das mit Sauerstoff angereicherte Wasser aufnehmenden Tank gewissermaßen ein Gaspolster beziehungsweise Gaspfropfen ausbilden dürfte. Dieser Gaspfropfen wird dann die Flüssigkeit nach und nach aus dieser Leitung in den Tank hinein verdrängen, bis er schließlich selbst den Tank erreicht und sich dann gewissermaßen entlädt beziehungsweise in sich zusammenfällt und vorübergehend wieder mit gelöstem Gas angereicherte Flüssigkeit in die Verbindungsleitung vom Abscheider in den Tank nachströmen kann. Die Folge sind im Ergebnis Druckschwankungen der aus dem Abscheider in nachfolgende Einrichtungen beziehungsweise Einrichtungsteile ausgetragenen, mit Gas angereicherten Flüssigkeit, welche einen Einsatz der in der Druckschrift beschriebenen Vorrichtung in druckbehafteten Systemen zumindest bei einem Primäreintrag von Gasgemischen mit Gasanteilen sehr unterschiedlich lösungsfähiger Gase, wie etwa innerhalb des druckbehafteten Wasserversorgungsnetzes bei einem Primäreintrag von Luft, im Grunde unmöglich machen.

Aufgabe der Erfindung ist es, eine Lösung bereitzustellen, welche eine noch effektivere Anreicherung einer Flüssigkeit mit Sauerstoff, insbesondere mit Sauerstoff aus der Umgebungsluft unter Erreichung einer sehr hohen Sättigung der Flüssigkeit mit dem Sauerstoff ermöglicht. Insbesondere soll es die Lösung dabei besonders vorteilhaft ermöglichen, Flüssigkeiten innerhalb druckbehafteter Systeme, wie beispielsweise des druckbehafteten Wasserversorgungsnetzes, bei Erreichung einer besonders hohen Sättigung mit Luftsauerstoff anzureichern. Hierzu sind ein Verfahren und eine Vorrichtung anzugeben.

Die Aufgabe wird durch ein Verfahren mit den Merkmalen des Hauptanspruchs gelöst. Eine die Aufgabe lösende, zur Durchführung des Verfahrens geeignete Vorrichtung ist durch den ersten Sachanspruch charakterisiert. Vorteilhafte Aus- und Weiterbildungen der Erfindung sind durch die Unteransprüche gegeben.

Nach dem zur Lösung der Aufgabe vorgeschlagenen Verfahren wird der in einer Flüssigkeit anzureichernde Sauerstoff als Teil eines Gasgemisches, nämlich der Umgebungsluft, mittels mindestens eines Injektors in die Flüssigkeit eingetragen und in ihr gelöst. Die mit gelösten und ungelösten Gasanteilen der Luft befrachtete Flüssigkeit wird zur Entfernung ungelöster, Blasen bildender Gasanteile einer dem Injektor bezüglich der Strömungsrichtung der Flüssigkeit nachgeordneten Entgasungseinheit zugeführt.

Erfindungsgemäß wird als Injektor ein Mehrfachinjektor mit mindestens zwei, in der Strömungsrichtung der Flüssigkeit zueinander parallel angeordneten, jeweils einen Ansaugstutzen aufweisenden und im Bereich eines Flüssigkeitsaustritts des Mehrfachinjektors zusammengeführten Injektorkammern verwendet, an dessen Ansaugstutzen von der durch den Mehrfachinjektor strömenden Flüssigkeit ein Unterdruck verursacht wird. Über den Ansaugstutzen mindestens einer der Injektorkammern des Mehrfachinjektors wird dabei durch den vorgenannten Unterdruck die in dem Mehrfachinjektor in die Flüssigkeit einzutragende Umgebungsluft angesaugt. In der dem Mehrfachinjektor nachgeordneten Entgasungseinheit werden die nicht gelösten Gasanteile der Luft von der Flüssigkeit getrennt und die von der Flüssigkeit getrennten Anteile nicht gelösten Sauerstoffs als Bestandteil eines Gas-Flüssigkeitsgemisches abermals einem Mehrfachinjektor zugeführt, bei dem es sich nicht notwendigerweise, aber vorzugsweise um denselben Mehrfachinjektor handelt, mittels welchem die Umgebungsluft ursprünglich in die Flüssigkeit eingetragen wurde. In dem betreffenden Mehrfachinjektor wird das Gas-Flüssigkeitsgemisch erneut in die mit dem Sauerstoff anzureichernde Flüssigkeit eingetragen. Erfindungsgemäß wird dabei das Gas-Flüssigkeitsgemisch mit dem ungelösten Sauerstoff aufgrund des, in einer die Entgasungseinheit mit dem letztgenannten Mehrfachinjektor verbindenden Rückführleitung von der durch diesen Mehrfachinjektor strömenden Flüssigkeit verursachten Unterdrucks aus der Entgasungseinheit zu dem betreffenden Mehrfachinjektor hin abgesaugt.

Gemäß der Erfindung wird demnach das vorhandene Angebot an dem in der Flüssigkeit anzureichernden Sauerstoff besonders effizient genutzt, indem dessen jeweils noch nicht in der Flüssigkeit gelöste Anteile mit dem Versuch, sie schließlich doch noch in der Flüssigkeit zu lösen, dieser gewissermaßen mehrfach angeboten werden. Auf diese Weise ist es möglich, sehr hohe prozentuale Anteile des zur Anreicherung der Flüssigkeit bestimmten Sauerstoffs in die Flüssigkeit zu überführen. Durch die mindestens eine Entgasungseinheit wird dabei sichergestellt, dass nicht gelöste Gasanteile wieder aus der Flüssigkeit entfernt werden, so dass diese beispielsweise in einem einer nach dem erfindungsgemäßen Verfahren arbeitenden Vorrichtung nachgeordneten Wasserversorgungsnetz nicht zu Druckschwankungen führen oder gar Einheiten dieses Wasserversorgungsnetzes beschädigen. Darüber hinaus dient die Entgasungseinheit aber auch dazu, diese Gasanteile in Form eines Gas-Flüssigkeitsgemisches, nämlich mit Gasblasen durchsetzter Flüssigkeit, zum erneuten Eintrag in die Flüssigkeit zur Verfügung zu stellen. Versuche haben dabei gezeigt, dass das erfindungsgemäße Verfahren beispielsweise eine besonders effektive Anreichung von Wasser mit Sauerstoff aus der Luft ermöglicht, in deren Ergebnis die jeweilige, von den in der Flüssigkeit herrschenden Druck- und Temperaturverhältnissen abhängige Sättigungsgrenze für den möglichen Sauerstoffeintrag zu etwa 98 % erreicht wird.

Anders als der nicht gelöste Sauerstoff, werden demgegenüber die leichteren in der Entgasungseinheit, von der Flüssigkeit abgetrennten noch ungelösten Gasanteile der zu ca. 78 % aus Stickstoff und zu ca. 21 % aus Sauerstoff bestehenden Umgebungsluft, welche sich, wie insbesondere der Stickstoff, aufgrund ihres geringeren Gewichts in einem oberen Bereich der Entgasungseinheit ansammeln, über ein Gasauslassventil der Entgasungseinheit in die Atmosphäre ausgetragen. Im Hinblick auf die Anreicherung von beispielsweise Wasser mit Sauerstoff durch den Eintrag von Luft ist es dabei von Vorteil, dass Stickstoff eine wesentlich geringere Tendenz hat, in Wasser in Lösung zu gehen als Sauerstoff. Der über das Gasauslassventil, vorzugsweise ein spezielles Automatik-Entlüftungsventil aus der Entgasungseinheit austretende, hier als Restluft bezeichnete Gasanteil weist einen noch erheblich höheren Stickstoffanteil als die "normale" Umgebungsluft auf, da zuvor größere Teile des Luftsauerstoffs in dem Mehrfachinjektor und auf dem Weg des Wassers zu der Entgasungseinheit in Lösung gegangen sind. Selbstverständlich gelangen aber mit der angesprochenen Restluft unvermeidlich im entsprechend geringen Maße auch Anteile zuvor nicht gelösten Sauerstoffs über das Gasauslassventil in die Atmosphäre, was jedoch zur Vereinfachung der Darstellungen und entsprechender Formulierungen im Weiteren vernachlässigt werden soll. Ebenso sind in dem zurückgeführten Gas-Flüssigkeitsgemisch, bei welchem es sich im Grunde um Flüssigkeit mit Luftblasen handelt, auch geringe Mengen Stickstoffs enthalten, was im Hinblick darauf, dass es als entscheidend anzusehen ist, dass ungelöste Anteile des Sauerstoffs der Flüssigkeit, vorzugsweise Wasser, gewissermaßen mehrfach zur Lösung angeboten werden, ebenfalls außer Betracht bleiben soll. Jedenfalls werden aber, was erfindungswesentlich ist, große Teile des zunächst noch ungelösten in der Flüssigkeit, respektive dem Wasser, anzureichernden Sauerstoffs mit dem Gas-Flüssigkeitsgemisch erneut dem beziehungsweise einem Mehrfachinjektor zugeführt, wohingegen ungelöste Anteile schwer löslicher Gase, nämlich insbesondere des Stickstoffs, von der Flüssigkeit getrennt beziehungsweise aus dem Gas-Flüssigkeitsgemisch abgetrennt und aus dem System ausgetragen werden.

Eine besonders gute und effektive Trennung der ungelösten Gasanteile von der Flüssigkeit wird erfindungsgemäß dadurch erreicht, dass die mit ihnen sowie mit gelösten Gasanteilen befrachtete Flüssigkeit in der dazu entsprechend ausgebildeten Entgasungseinheit stark verwirbelt wird. Die hoch mit Sauerstoff angereicherte, aufgrund der effektiven Abtrennung nicht gelöster Gasanteile weitgehend blasenfreie Flüssigkeit tritt aus der Entgasungseinheit über deren Flüssigkeitsaustritt aus. Aufgrund dieser effektiven Abtrennung nicht gelöster Gasanteile, bei der zudem eine weitgehende Trennung des leichter in Lösung gehenden Sauerstoffs von den in der Flüssigkeit nur schwer in Lösung gehenden Gasanteilen, wie insbesondere den ungelösten Stickstoffanteilen erfolgt, ist das erfindungsgemäße Verfahren hervorragend für die Anwendung in geschlossenen Gesamtsystemen mit einer unter Druck stehenden Flüssigkeit geeignet. Dabei ergibt sich gleichzeitig der Vorteil, dass sich bei erhöhtem Druck die Sättigungsgrenze für den sich in der Flüssigkeit lösenden Sauerstoff, das heißt die theoretisch maximal in der Flüssigkeit zu lösende und somit auch die sich bei der Anwendung des Verfahrens tatsächlich in der Flüssigkeit lösende Sauerstoffmenge erhöht.

Eine die Aufgabe lösende, zur Durchführung des Verfahrens zur Anreicherung einer Flüssigkeit mit Sauerstoff aus der Umgebungsluft geeignete Vorrichtung besteht im Wesentlichen aus mindestens einem Injektor, in welchem der Sauerstoff in die Flüssigkeit eingetragen und in der Flüssigkeit gelöst wird, und aus mindestens einer mit dem mindestens einen Injektor bezüglich der Strömungsrichtung der Flüssigkeit nachgeordneten Entgasungseinheit. Der vorgenannte Injektor und die vorgenannte Entgasungseinheit sind durch mindestens eine Verbindungsleitung miteinander verbunden, über welche die mit gelösten und ungelösten Gasanteilen befrachtete Flüssigkeit der Entgasungseinheit zugeführt wird. In der Entgasungseinheit werden die in der Flüssigkeit nicht in Lösung gegangenen Gasanteile von der Flüssigkeit wieder getrennt. Jeder Injektor und jede Entgasungseinheit der Vorrichtung weist jeweils mindestens einen Flüssigkeitseintritt und einen Flüssigkeitsaustritt auf, wobei jeder Flüssigkeitseintritt einer Entgasungseinheit über die bereits angesprochene Verbindungsleitung mit dem Flüssigkeitsaustritt eines Injektors verbunden ist. Ferner weisen jeder Injektor mindestens einen Ansaugstutzen und jede Entgasungseinheit mindestens einen Flüssigkeitsaustritt für die mit dem gelösten Sauerstoff angereicherte Flüssigkeit auf.

Erfindungsgemäß ist der mindestens eine Injektor als ein Mehrfachinjektor mit mindestens zwei, in der Strömungsrichtung der Flüssigkeit zueinander parallel angeordneten, im Bereich seines Flüssigkeitsaustritts zusammengeführten sowie jeweils einen Ansaugstutzen aufweisenden Injektorkammern ausgebildet. Ferner weist bei der zur Lösung der Aufgabe vorgeschlagenen Vorrichtung die mindestens eine Entgasungseinheit mindestens einen Absauganschluss auf, der über eine Rückführleitung mit dem Ansaugstutzen eines Mehrfachinjektors verbunden ist. Über die vorgenannte Rückführleitung wird in den mittels der Entgasungseinheit von der Flüssigkeit getrennten Gasanteilen noch enthaltener, in der Flüssigkeit anzureichernder Sauerstoff dem betreffenden, über die Rückführleitung mit der Entgasungseinheit verbundenen Mehrfachinjektor als Bestandteil eines Gas-Flüssigkeitsgemisches zum erneuten Eintrag in die Flüssigkeit zugeführt. Dabei wird das Gas-Flüssigkeitsgemisch mit dem ungelösten Sauerstoff durch einen in der Rückführleitung von der durch den Mehrfachinjektor strömenden Flüssigkeit verursachten Unterdruck aus der Entgasungseinheit abgesaugt. Die gegenüber dem Sauerstoff leichteren, nicht in der Flüssigkeit gelösten Gasanteile, also insbesondere ungelöster Stickstoff, entweichen dagegen über ein im oberem Bereich der Entgasungseinheit, in welchem sich diese leichteren Gasanteile ansammeln, angeordnetes Gasauslassventil. Bei Letzterem handelt es sich vorzugsweise um ein spezielles Automatik-Entlüftungsventil. Für eine besonders effektive Trennung ungelöster Gasanteile von der Flüssigkeit durch die gemäß dem Verfahren vorgesehene Verwirbelung der in die mindestens eine Entgasungseinheit eintretenden Flüssigkeit ist deren Flüssigkeitseintritt als ein tangential in die Entgasungseinheit einmündender Stutzen ausgebildet.

Die zuvor beschriebene Einrichtung ist aufgrund ihrer speziellen Ausbildung zur Umsetzung des erfindungsgemäßen Verfahrens prädestiniert für einen Einsatz in geschlossenen, druckbehafteten Systemen, also insbesondere für den Einsatz in dem druckbehafteten Wasserversorgungsnetz. Im Hinblick auf den letztgenannten Einsatzfall ermöglicht sie dabei eine hochgradige Anreicherung des innerhalb des Netzes unter Druck stehenden Wassers mit Luftsauerstoff, wobei es vorteilhafterweise keines Eintrags reinen Sauerstoffs aus speziellen Saustoffvorräten bedarf.

Soweit vorstehend und in den Patentansprüchen im Zusammenhang mit der Darstellung der erfindungsgemäßen Vorrichtung jeweils von mindestens einem Mehrfachinjektor und mindestens einer Entgasungseinheit gesprochen wird, soll dies verdeutlichen, dass selbstverständlich, je nach Einsatzfall, sehr unterschiedliche Konfigurationen der Einrichtung mit gegebenenfalls mehreren Mehrfachinjektoren und/oder mehreren Entgasungseinheiten denkbar sind, wobei aber entsprechend dem Grundprinzip der erfindungsgemäßen Lösung zwischen jeder Entgasungseinheit und mindestens einem Mehrfachinjektor gewissermaßen eine Art Rückkopplung derart besteht, dass in der Flüssigkeit anzureicherndes Gas oder Gasgemisch, welches noch nicht in Lösung gegangen ist und daher in der Entgasungseinheit wieder von der Flüssigkeit getrennt wird, zum Zweck des wiederholten Eintrags in die Flüssigkeit in der Form eines Gas-Flüssigkeitsgemisches erneut einem Mehrfachinjektor zugeführt wird. Vereinfachend soll nachfolgend bei der Beschreibung weiterer möglicher Ausbildungsformen der Vorrichtung im Allgemeinen von einem Mehrfachinjektor und einer Entgasungseinheit gesprochen werden. Jedoch soll die Erfindung hierdurch keinesfalls auf eine nur einen Mehrfachinjektor und eine Entgasungseinheit aufweisende Vorrichtung beschränkt werden.

Bei einer vorteilhaften Weiterbildung der erfindungsgemäßen Vorrichtung ist auch der Flüssigkeitsaustritt für die mit dem Sauerstoff angereicherte Flüssigkeit als ein in Bezug auf die Entgasungseinheit tangential angeordneter beziehungsweise tangential in sie einmündender Stutzen ausgebildet. Hierdurch wird die angestrebte starke Verwirbelung der Flüssigkeit in der Entgasungseinheit begünstigt.

Entsprechend einer bevorzugten Ausbildungsform der erfindungsgemäßen Vorrichtung ist zudem in der Verbindungsleitung zwischen dem Mehrfachinjektor und der Entgasungseinheit, über welche die mit gelöstem und ungelöstem Gas oder Gasgemisch befrachtete Flüssigkeit der dem Mehrfachinjektor nachgeordneten Entgasungseinheit zugeführt wird, eine Pumpe angeordnet. Mittels dieser Pumpe wird die der Entgasungseinheit zur Abtrennung der nicht gelösten Gasanteile zugeführte Flüssigkeit mit Druck beaufschlagt. Hierdurch werden einerseits beim Austritt aus dem Mehrfachinjektor in der Flüssigkeit auftretende Druckverluste, welche beispielsweise im Falle einer Einbindung der erfindungsgemäßen Vorrichtung in das Wasserversorgungsnetz unerwünscht sind, kompensiert. Andererseits wird hierdurch in besonders vorteilhafter Weise die in der Entgasungseinheit erreichte Verwirbelung der Flüssigkeit zusätzlich verstärkt. Durch die mittels der Pumpe bewirkte Druckerhöhung wird dabei im Zusammenhang mit der tangentialen Ausbildung beziehungsweise Anordnung des Flüssigkeitseintritts sowie gegebenenfalls des Flüssigkeitsaustritts erreicht, dass in der in die Entgasungseinheit eintretenden Flüssigkeit ein sehr starker Wirbel entsteht, durch welchen unter Wandablösungseffekten, aufgrund der hohen in der Mitte des Wirbels wirkenden Energien, nach dem Zentrifugalprinzip die nicht gelösten Gasanteile als Bestandteil eines Gas-Flüssigkeitsgemisches von der Flüssigkeit mit den gelösten Gasanteilen getrennt werden.

Der oder die Mehrfachinjektoren beziehungsweise deren einzelne Injektorkammern arbeiten vorzugsweise in bekannter Weise nach dem Venturi-Prinzip, wonach die Umgebungsluft beziehungsweise die aus der Entgasungseinheit zurückgeführte "Restluft" über einen Ansaugstutzen angesaugt und der Flüssigkeit zugeführt wird, welcher im Bereich einer für die durch die jeweilige Injektorkammer strömende Flüssigkeit gegebenen Querschnittsverengung angeordnet ist. Dabei wird die Umgebungsluft beziehungsweise die "Restluft" über diesen Ansaugstutzen durch die Sogwirkung der daran vorbeiströmenden Flüssigkeit in den Mehrfachinjektor respektive in dessen entsprechende Injektorkammer und damit in die Flüssigkeit gewissermaßen hineingezogen.

Vorzugsweise, aber nicht zwingend ist mindestens eine Injektorkammer des Mehrfachinjektors über ihren Ansaugstutzen mit einem Absauganschluss einer Entgasungseinheit verbunden, welche mit demselben Mehrfachinjektor auch über eine Verbindungsleitung für die aus diesem austretende, mit dem Gas oder Gasgemisch befrachtete Flüssigkeit verbunden ist.

Bei einer praxisgerechten Ausbildungsform der Vorrichtung sind in dem Ansaugstutzen zum Ansaugen der Umgebungsluft ein Rückschlagventil und ein Saugschutzkorb angeordnet. Der vorgenannte Saugschutzkorb verhindert dabei das Eindringen von Verunreinigungen in den Mehrfachinjektor, welche gegebenenfalls aufgrund der Sogwirkung zusammen mit der Umgebungsluft über den Ansaugstutzen angesaugt werden. Das Rückschlagventil verhindert insbesondere im Falle eines druckbelasteten Stillstands der Einrichtung einen unerwünschten Flüssigkeitsaustritt aus dem Mehrfachinjektor über dessen Ansaugstutzen für die Umgebungsluft.

Entsprechend einer besonders bevorzugten Ausbildungsform ist die Entgasungseinheit als ein rohrförmiger Behälter ausgebildet. Der Behälter ist in einem oberen Abschnitt in seinem Durchmesser erweitert und verjüngt sich unterhalb des mit dem Flüssigkeitsaustritt eines Mehrfachinjektors verbundenen Flüssigkeitseintritts. Durch diese Formgebung wird eine starke Verwirbelung der in die Entgasungseinheit eintretenden Flüssigkeit und damit die Abtrennung der ungelösten als Blasen in Erscheinung tretenden Gasanteile besonders begünstigt. Im Kopfbereich des Behälters sind ein mit einem Ansaugstutzen eines Mehrfachinjektors verbundener Absauganschluss und das Gasauslassventil angeordnet. Darüber hinaus ist bei dieser Ausbildungsform im Fußbereich des Behälters ein weiterer, mit einem Ansaugstutzen eines, gegebenenfalls desselben Mehrfachinjektors verbundener Absauganschluss angeordnet. Der Absauganschluss im Kopfbereich des Behälters ist dabei so gestaltet, dass ausgehend von diesem Absauganschluss, ein sich bis unterhalb des Flüssigkeitseintritts der Entgasungseinheit erstreckender Rohrabschnitt in den Behälter hineinragt. Hierdurch ist sichergestellt, dass aufsteigendes leichteres Gas über das Auslassventil nach außen abgegeben wird, aber in der Flüssigkeit vorhandene, ungelöste Gasblasen aus Sauerstoff als Bestandteil eines Gas-Flüssigkeitsgemisches über den vorgenannten Rohrabschnitt unmittelbar dem Absauganschluss zugeführt und von hier in die mit dieser verbundene Injektorkammer überführt werden. Vorzugsweise ragt darüber hinaus, zum Zweck des unmittelbaren Absaugens von ungelösten Sauerstoff enthaltendem Gas-Flüssigkeitsgemisch aus dem Fußbereich der Entgasungseinheit, ausgehend von dem in diesem Bereich angeordneten Absauganschluss ein sich bis oberhalb des Flüssigkeitsaustritts für die mit Sauerstoff angereicherte Flüssigkeit erstreckender Rohrabschnitt in den die Entgasungseinheit ausbildenden Behälter hinein.

Nachfolgend soll mit Hilfe von Zeichnungen ein Ausführungsbeispiel der Erfindung erläutert werden. In den zugehörigen Zeichnungen zeigen:
- Fig. 1:: das Prinzipschema einer möglichen Ausbildungsform der erfindungsgemäßen Vorrichtung,
- Fig. 2 und 3:: eine mögliche Ausbildungsform des Mehrfachinjektors der Vorrichtung,
- Fig. 4 bis 6:: eine mögliche Ausbildungsform für eine Entgasungseinheit der Vorrichtung.

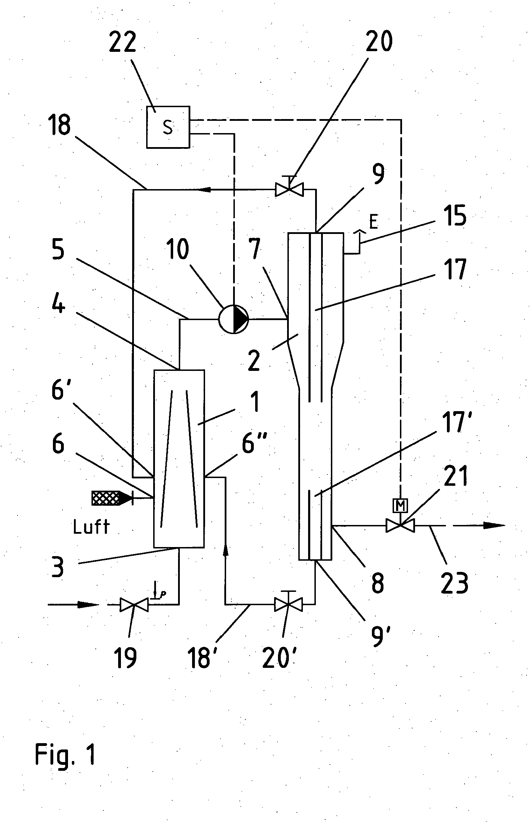

Die Fig. 1 zeigt ein Prinzipschema einer möglichen Ausbildungsform der erfindungsgemäßen Vorrichtung. Bei der im Beispiel gezeigten Ausbildungsform handelt es sich um eine Vorrichtung zur Anreicherung von Wasser mit Luftsauerstoff. Diese besteht im Wesentlichen aus dem Mehrfachinjektor 1 und der Entgasungseinheit 2, aus Verbindungsleitungen 5, 18, 18', 23 für das mit dem Sauerstoff anzureichernde Wasser und für das Gas-Flüssigkeitsgemisch, vorliegend Wasser mit Blasen ungelösten Sauerstoffs beziehungsweise ungelöster Luft, aus in den Verbindungsleitungen 5, 18, 18', 23 angeordneten Ventilen 19, 20, 20', 21, einer Pumpe 10 und aus einer die Pumpe 10 und die Ventile 19, 20, 20', 21 steuernden Steuereinrichtung 22.

Die gezeigte zur Anreicherung von Wasser mit Sauerstoff dienende Vorrichtung ist beispielsweise Teil einer Wasserversorgungseinrichtung, in welcher zum Beispiel aus einem Brunnen gewonnenes Trinkwasser zum Zweck der Enteisenung mit Sauerstoff angereichert wird. Das entsprechende Wasser wird dem Mehrfachinjektor 1 mit dem Anlagendruck der Wasserversorgungseinrichtung zugeführt. Bei der in der Fig. 1 gezeigten Ausbildungsform ist dem Mehrfachinjektor 1 ein nicht zwingend vorhandenes Druckminderungsventil 19 vorgeschaltet, mit dem der Druck bedarfsweise etwas reduziert und insbesondere nahezu konstant gehalten werden kann. Bei dem Mehrfachinjektor 1 handelt es sich um einen Injektor, dessen Injektorkammern 11, 12, 13, 14 nach dem Venturi-Prinzip arbeiten. In den Injektorkammern 11, 12,13,14 wird das einströmende Wasser durch einen in seinem Querschnitt verengten Bereich eines Flüssigkeitskanals geführt. Für zwei Injektorkammern 11, 12 ist in diesem verengten Bereich ein Ansaugstutzen 6 zum Ansaugen von Umgebungsluft vorgesehen. Durch die Erhöhung der Fließgeschwindigkeit, die das Wasser in dem verengten Bereich erfährt, entsteht an dem Ansaugstutzen 6 eine Sogwirkung, durch welche Luft aus der Umgebung in den Mehrfachinjektor 1 hineingezogen sowie in das Wasser eingetragen wird, wobei der Sauerstoff der Luft zu großen Teilen im Wasser gelöst wird. Das mit dem Gasgemisch, nämlich teilweise gelöstem Sauerstoff und ungelöster Luft, befrachtete Wasser wird über die Verbindungsleitung 5 der Entgasungseinheit 2 zugeführt. In der Verbindungsleitung 5 ist eine durch die Steuereinrichtung 22 gesteuerte Pumpe 10 angeordnet, durch welche das Wasser vor dem Eintrag in die Entgasungseinheit 2 mit Druck beaufschlagt wird. In der Entgasungseinheit 2 werden die nicht gelösten Anteile der Luft nach dem Zentrifugalprinzip wieder vom Wasser getrennt. Das Wasser mit dem darin gelösten Sauerstoff wird über einen Flüssigkeitsaustritt 8 und die Verbindungsleitung 23 der Entgasungseinheit 2 nachgeordneten, hier nicht dargestellten Einheiten der Wasserversorgungseinrichtung beziehungsweise des Wasserversorgungsnetzes zugeführt. Die in dem Mehrfachinjektor 1 nicht gelösten Anteile der Luft werden in der Entgasungseinheit 2 der erfindungsgemäßen Vorrichtung als Bestandteil eines Blasen aufweisenden Gas-Flüssigkeitsgemisches beziehungsweise Gas-Wasser-Gemisches von dem Wasser mit den darin gelösten Gasanteilen getrennt. Der Stickstoff und sich im oberen Teil der Entgasungseinheit 2 sammelnde überschüssige Luft beziehungsweise Restluft werden über ein Gasauslassventil 15 an die Atmosphäre abgegeben. Wesentliche Teile des ungelösten Sauerstoffs hingegen werden in erfindungswesentlicher Weise als Bestandteil eines Gas-Wasser-Gemisches über Absauganschlüsse 9, 9' und Rückführleitungen 18, 18' zum Zweck eines erneuten und gezielten Eintrags in das Wasser in den Mehrfachinjektor 1 abgesaugt. An dem Mehrfachinjektor sind hierfür weitere Ansaugstutzen 6', 6" jeweils in einem Verengungsbereich der Injektorkammern 13, 14 vorgesehen, über welche das in der Entgasungseinheit 2 vom dem Wasser mit dem gelösten Gas abgetrennte, ungelösten Sauerstoff enthaltende Gas-Wasser-Gemisch im Kopfbereich und im Fußbereich der Entgasungseinheit 2 zum Mehrfachinjektor 1 hin abgesaugt wird.

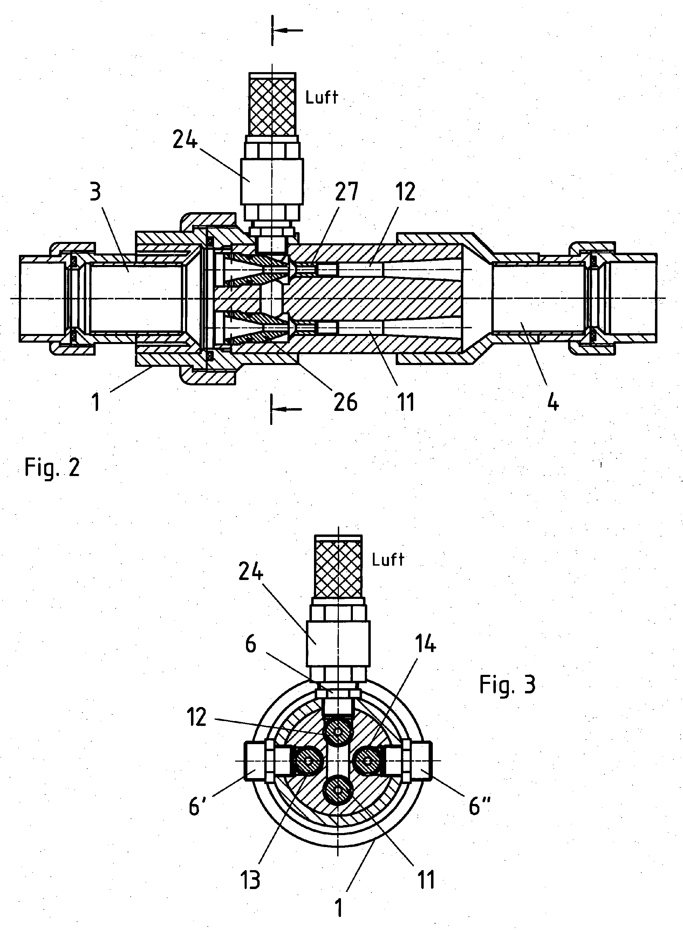

Die Fig. 2 und 3 zeigen den zu der Vorrichtung gemäß der Fig. 1 gehörenden Mehrfachinjektor 1 in zwei Schnittansichten, nämlich einmal im Axialschnitt (Fig. 2) und einmal im Radialschnitt (Fig. 3). In dem Mehrfachinjektor 1 sind gemäß dem gezeigten Beispiel bezüglich der Strömungsrichtung des anzureichernden, durch den Mehrfachinjektor 1 geführten Wassers vier Injektorkammern 11, 12, 13, 14 parallel zueinander angeordnet. Zwei Injektorkammern 11, 12 der jeweils nach dem Venturi-Prinzip arbeitenden Injektorkammern 11, 12, 13, 14 dienen der Anreicherung des Wassers mit Sauerstoff durch den Eintrag von Umgebungsluft. Für diese beiden Injektorkammern 11, 12 ist an dem Mehrfachinjektor 1 ein gemeinsamer Ansaugstutzen 6 angeordnet, über welchen Luft aus der Umgebung aufgrund der Sogwirkung des durch die Injektorkammern 11, 12 strömenden Wassers angesaugt wird. Die starke Sogwirkung in diesen Injektorkammern 11, 12, aber auch in den Injektorkammern 13, 14 wird durch das sich mit hoher Fließgeschwindigkeit durch den Mehrfachinjektor 1 beziehungsweise durch dessen Injektorkammern 11, 12, 13, 14 bewegende Wasser erzeugt. Dabei wird eine entsprechend hohe Fließgeschwindigkeit des Wassers durch in den Injektorkammern 11, 12, 13, 14 jeweils angeordnete Düsen, nämlich eine Strahldüse 26 und eine dieser in der Strömungsrichtung nachgeordnete Reduzierdüse 27 zur Querschnittsreduktion, erreicht. In dem Ansaugstutzen 6 sind (nicht im Detail gezeigt) ein Rückschlagventil und ein Saugschutzkorb 24 zum Schutz vor Verunreinigungen angeordnet. Die angesaugte Luft wird in den Injektorkammern 11, 12 zu großen Teilen mikrofein in dem Wasser gelöst. Das mit gelöster und ungelöster Luft befrachtete Wasser wird dann über den Flüssigkeitsaustritt 4 des Mehrfachinjektors 1 ausgetragen und über die in der Fig. 1 gezeigte Verbindungsleitung 5 der Entgasungseinheit 2 zugeführt. Die beiden weiteren Injektorkammern 13, 14 des Mehrfachinjektors 1 weisen, wie in der radial geschnittenen Ansicht der Fig. 3 zu erkennen ist, jeweils einen Ansaugstutzen 6', 6" auf. Über diese Ansaugstutzen 6', 6" werden die bis dahin nicht in dem Wasser gelösten Anteile des Luftsauerstoffs, welche zuvor in der Entgasungseinheit 2 als Bestandteil eines in Form von Wasser mit einer Vielzahl von Blasen in Erscheinung tretenden Gas-Wasser-Gemisches von dem Wasser mit den darin gelösten Gasanteilen getrennt werden, erneut in das Wasser eingetragen. Sie werden durch die von dem durch diese Injektorkammern 13, 14 strömenden Wasser erzeugte Sogwirkung aus der Entgasungseinheit 2 über deren Absauganschlüsse 9, 9' abgesaugt und in den Injektorkammern 13, 14 erneut in das Wasser eingetragen. An dem Flüssigkeitsaustritt 4 des Mehrfachinjektors 1 werden die durch die vier parallel zueinander angeordneten Injektorkammern 11, 12, 13, 14 gebildeten Strömungskanäle vor dem Austrag der Flüssigkeit aus dem Mehrfachinjektor 1 wieder zusammengeführt.

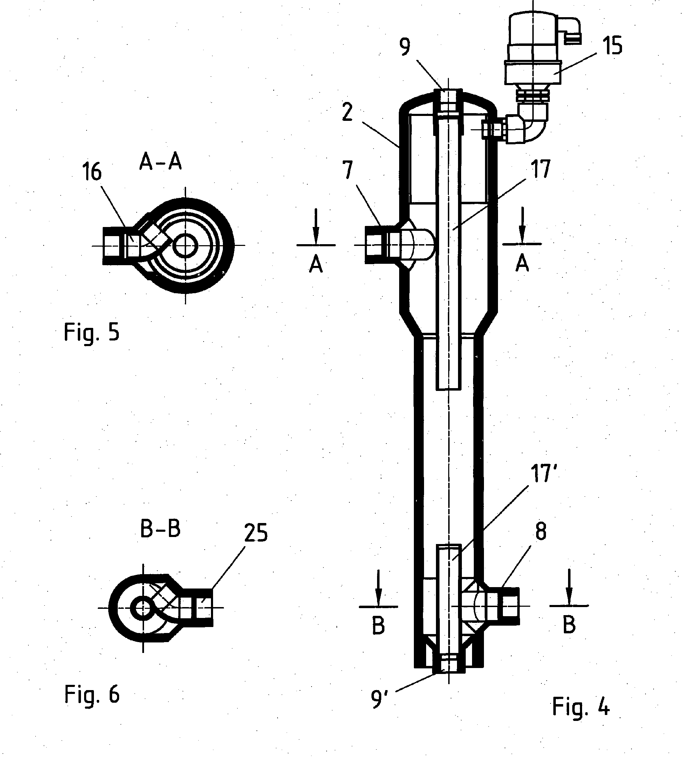

Die Fig. 4 bis 6 zeigen die Entgasungseinheit 2 der Vorrichtung nach der Fig. 1 ebenfalls in mehreren Schnittdarstellungen, nämlich in einem Axialschnitt (Fig. 4) und ferner einmal in einem Radialschnitt durch den Kopfbereich (Fig. 5) der Entgasungseinheit 2 und einmal in einem Radialschnitt durch den Fußbereich (Fig. 6) der Entgasungseinheit 2. Wie aus der den Radialschnitt durch den Kopfbereich betreffenden Ansicht der Fig. 5 erkennbar ist, wird das mit gelöstem Sauerstoff und ungelöster Luft befrachtete Wasser der Entgasungseinheit 2 über einen Stutzen 16 zugeführt, welcher tangential in den rohrförmigen Behälter der Entgasungseinheit 2 einmündet. Das mit dem gelösten Sauerstoff angereicherte Wasser verlässt die Entgasungseinheit 2 über den ebenfalls in Form eines tangentialen Stutzens 25 ausgebildeten Flüssigkeitsaustritt 8. Hierdurch sowie durch den zuvor mittels der Pumpe 10 (siehe Fig. 1) zusätzlich erzeugten Druck wird das in die Entgasungseinheit 2 einströmende Wasser in dem Behälter der Entgasungseinheit 2 stark verwirbelt. Aufgrund der Verwirbelung werden die ungelösten Anteile der Luft als Gas-Wasser-Gemisch von dem Wasser mit gelöstem Sauerstoff getrennt. Der von dem Wasser abgetrennte ungelöste Stickstoff beziehungsweise genauer gesagt die ungelöste Luft, welche aufgrund dessen, dass ein Teil des Sauerstoffs der ursprünglich in das Wasser eingetragenen Luft in dem Wasser in Lösung gegangen ist, einen gegenüber der Umgebungsluft noch höheren Stickstoffanteil aufweist, wird über das Gasauslassventil 15 in die Atmosphäre ausgetragen. Der noch ungelöste Sauerstoff wird hingegen größtenteils als Bestandteil eines Gas-Wasser-beziehungsweise Gas- LuftGemisches über die Absauganschlüsse 9, 9' im Kopfbereich und im Fußbereich der Entgasungseinheit 2 zum Mehrfachinjektor 1 hin abgesaugt. Wie zu erkennen, ragen dazu von dem im Kopfbereich angeordneten Absauganschluss 9 ein sich bis unterhalb des Eintrittsstutzens 16 für das Wasser erstreckender Rohrabschnitt 17 und von dem im Fußbereich unterhalb des Flüssigkeitsaustrittes 8 angeordneten Absauganschluss 9' ein sich bis oberhalb des Flüssigkeitsaustritts 8 erstreckender Rohrabschnitt 17' in den Behälter der Entgasungseinheit 2 hinein. Über den Rohrabschnitt 17 wird das durch die Zentrifugalwirkung abgetrennte Gas-Wasser-Gemisch mit dem ungelösten Sauerstoff unmittelbar aus dem mit gelöstem Sauerstoff angereicherten Wasser in Richtung des oberen Absauganschlusses 9 und von hier über den Ansaugstutzen 6' in die Injektorkammer 13 abgesaugt. Entsprechend wird Gas-Wasser-Gemisch mit ungelöstem Sauerstoff über den Rohrabschnitt 17', den unteren Absauganschluss 9' sowie den Ansaugstutzen 6" direkt in die Injektorkammer 14 abgesaugt. Das zur Trennung von den ungelösten Gasanteilen in der Entgasungseinheit 2 beziehungsweise deren Behälter verwirbelte, mit gelöstem Sauerstoff angereicherte Wasser wird, wie bereits ausgeführt schließlich über den Flüssigkeitsaustritt 8 am Fuß des Behälters ausgetragen und nachfolgenden Einheiten der Wasserversorgungseinrichtung zugeleitet.

### Verwendete Bezugszeichen

- 1: Mehrfachinjektor
- 2: Entgasungseinheit
- 3: Flüssigkeitseintritt
- 4: Flüssigkeitsaustritt
- 5: Verbindungsleitung
- 6, 6', 6": Ansaugstutzen
- 7: Flüssigkeitseintritt
- 8: Flüssigkeitsaustritt
- 9,9': Absauganschluss
- 10: Pumpe
- 11, 12, 13, 14: Injektorkammer
- 15: Gasauslassventil
- 16: Stutzen
- 17, 17': Rohrabschnitt
- 18, 18': Rückführleitung
- 19: Druckminderungsventil
- 20, 20', 21: Ventil
- 22: Steuereinrichtung
- 23: Verbindungsleitung
- 24: Saugschutzkorb
- 25: Stutzen
- 26: Strahldüse
- 27: Reduzierdüse

## Patentansprüche

1. Verfahren zur Anreicherung einer Flüssigkeit mit Sauerstoff, wobei der Sauerstoff in die Flüssigkeit als Teil eines Gasgemisches, nämlich der Umgebungsluft, mittels eines Injektors eingetragen und in ihr teilweise gelöst wird und wobei die den Injektor verlassende, mit gelösten und ungelösten Gasanteilen der Luft befrachtete Flüssigkeit zur Entfernung ungelöster, Blasen in der Flüssigkeit bildender Gasanteile einer dem Injektor nachgeordneten Entgasungseinheit (2) zugeführt wird, **dadurch gekennzeichnet, dass** als Injektor ein Mehrfachinjektor (1) mit mindestens zwei, in der Strömungsrichtung der Flüssigkeit zueinander parallel angeordneten, jeweils einen Ansaugstutzen (6, 6', 6") aufweisenden und im Bereich eines Flüssigkeitsaustritts (4) des Mehrfachinjektors (1) zusammengeführten Injektorkammern (11, 12, 13, 14) verwendet wird, an dessen Ansaugstutzen (6, 6', 6") von der durch den Mehrfachinjektor (1) strömenden Flüssigkeit ein Unterdruck verursacht wird, durch den die Umgebungsluft über einen Ansaugstutzen (6) angesaugt wird und dass die nicht gelösten Anteile der Luft von der der Entgasungseinheit (2) aus dem Mehrfachinjektor (1) zugeführten Flüssigkeit getrennt werden, indem die Flüssigkeit in der dazu entsprechend ausgebildeten Entgasungseinheit (2) verwirbelt wird, wobei noch nicht gelöster Sauerstoff als Bestandteil eines Gas-Flüssigkeitsgemisches über einen Absauganschluss (9, 9') der Entgasungseinheit (2) und eine diesen mit dem Ansaugstutzen (6', 6") eines Mehrfachinjektors (1) verbindende Rückführleitung (18, 18') aufgrund des Unterdrucks an dem Ansaugstutzen (6', 6") aus der Entgasungseinheit (2) in diesen Mehrfachinjektor (1) abgesaugt und erneut in die ihn durchströmende Flüssigkeit eingetragen wird, wohingegen gegenüber dem Sauerstoff leichtere, sich im oberen Teil der Entgasungseinheit (2) sammelnde nicht gelöste Gasanteile der Luft, nämlich im Wesentlichen Stickstoff, über ein Gasauslassventil (15) der Entgasungseinheit (2) in die Atmosphäre ausgetragen werden und die mit gelöstem Sauerstoff angereicherte Flüssigkeit aus einem Flüssigkeitsaustritt (8) der Entgasungseinheit (2) austritt.

2. Vorrichtung zur Anreicherung einer Flüssigkeit mit Sauerstoff, mit mindestens einem Injektor, in welchem der Sauerstoff als Teil eines Gasgemisches, nämlich der Umgebungsluft, in die Flüssigkeit eingetragen und in der Flüssigkeit gelöst wird und mit mindestens einer dem mindestens einen Injektor bezüglich der Strömungsrichtung der Flüssigkeit nachgeordneten Entgasungseinheit (2), wobei jeder Injektor mindestens einen Flüssigkeitseintritt (3), einen Flüssigkeitsaustritt (4) und Ansaugstutzen (6, 6', 6") aufweist und wobei jede Entgasungseinheit (2) mindestens einen, über eine Verbindungsleitung (5) mit einem Flüssigkeitsaustritt (4) eines Injektors verbundenen Flüssigkeitseintritt (7) und mindestens einen Flüssigkeitsaustritt (8) zur Abgabe der Flüssigkeit mit dem darin gelösten Sauerstoff aufweist, **dadurch gekennzeichnet, dass** der oder die Injektoren als ein Mehrfachinjektor (1) mit mindestens zwei, in der Strömungsrichtung der Flüssigkeit zueinander parallel angeordneten, im Bereich seines Flüssigkeitsaustritts (4) zusammengeführten sowie jeweils einen Ansaugstutzen (6, 6', 6") aufweisenden Injektorkammern (11, 12, 13, 14) ausgebildet sind und dass mindestens ein Ansaugstutzen (6) zum Ansaugen der Umgebungsluft angeordnet und mindestens ein Ansaugstutzen (6', 6") durch eine Rückführleitung (18, 18') mit einem Absauganschluss (9, 9') der oder einer der Entgasungseinheiten (2) verbunden ist, über den in der Flüssigkeit enthaltener noch ungelöster Sauerstoff als Bestandteil eines Gas-Flüssigkeitsgemisches aus der betreffenden Entgasungseinheit (2) in den Mehrfachinjektor (1) abgesaugt wird, wobei der Flüssigkeitseintritt (7) der mindestens einen Entgasungseinheit (2) als ein tangential in diese einmündender Stutzen (16) ausgebildet ist und die mindestens eine Entgasungseinheit (2) zum Austrag sich dort sammelnder nicht gelöster, gegenüber dem Sauerstoff leichterer Gasanteile der Luft, nämlich im Wesentlichen Stickstoff, in ihrem oberen Bereich ein Gasauslassventil (15) aufweist.

3. Vorrichtung nach Anspruch 2, **dadurch gekennzeichnet, dass** der Flüssigkeitsaustritt (8) der mindestens einen Entgasungseinheit (2) als ein tangential in die Entgasungseinheit (2) einmündender Stutzen (25) ausgebildet ist.

4. Vorrichtung nach Anspruch 2 oder 3, **dadurch gekennzeichnet, dass** in der Verbindungsleitung (5) zwischen dem mindestens einem Mehrfachinjektor (1) und der mindestens einen Entgasungseinheit (2), über welche die mit gelöstem und ungelöstem Gas oder Gasgemisch befrachtete Flüssigkeit der dem Mehrfachinjektor (1) nachgeordneten Entgasungseinheit (2) zugeführt wird, eine Pumpe (10) angeordnet ist, so dass die der Entgasungseinheit (2) zur Abtrennung der nicht gelösten Gasanteile zugeführte Flüssigkeit zusätzlich mit Druck beaufschlagt ist.

5. Vorrichtung nach einem der Ansprüche 2 bis 4, **dadurch gekennzeichnet, dass** mindestens eine Injektorkammer (13, 14) des Mehrfachinjektors (1) über ihren Ansaugstutzen (6', 6") mit einem Absauganschluss (9, 9') einer Entgasungseinheit (2) verbunden ist, welche mit dem betreffenden Mehrfachinjektor (1) auch über eine Verbindungsleitung (5) für die mit gelösten und ungelösten Gasanteilen der Luft befrachtete Flüssigkeit verbunden ist.

6. Vorrichtung nach einem der Ansprüche 2 bis 5, **dadurch gekennzeichnet, dass** mindestens eine Injektorkammer (11, 12) des Mehrfachinjektors (1) einen Ansaugstutzen (6) zum Ansaugen von Umgebungsluft aufweist, in welchem ein Rückschlagventil und Saugschutzkorb (24) angeordnet sind.

7. Vorrichtung nach einem der Ansprüche 2 bis 6, **dadurch gekennzeichnet, dass** die mindestens eine Entgasungseinheit (2) als ein rohrförmiger, sich in einem oberen Abschnitt in seinem Durchmesser erweiternder Behälter ausgebildet ist, in dessen Kopfbereich ein mit einem Ansaugstutzen (6') eines Mehrfachinjektors (1) verbundener Absauganschluss (9) und das Gasauslassventil (15) angeordnet sind und in dessen Fußbereich ein weiterer, mit einem Ansaugstutzen (6") eines Mehrfachinjektors (1) verbundener Absauganschluss (9') angeordnet ist, wobei ausgehend von dem im Kopfbereich angeordneten Absauganschluss (9) ein sich bis unterhalb des Flüssigkeitseintritts (7) erstreckender Rohrabschnitt (17) in den Behälter der Entgasungseinheit (2) hineinragt.

8. Vorrichtung nach Anspruch 7, **dadurch gekennzeichnet, dass** ausgehend von dem im Fußbereich angeordneten Absauganschluss (9') ein sich bis oberhalb des Flüssigkeitsaustritts (8) erstreckender Rohrabschnitt (17') in den Behälter der Entgasungseinheit (2) hineinragt.

## Claims

1. A method for enriching a liquid with oxygen, whereby the oxygen is introduced into the liquid as part of a gas mixture, i.e., the ambient air, by means of an injector and is partially dissolved in it, and whereby the liquid which leaves the injector and which is laden with dissolved and undissolved gas components of the air is introduced into a degassing unit (2) connected downstream to the injector for the removal of undissolved gas components forming bubbles in the liquid, **characterised in that** a multiple injector (1) having at least two injector chambers (11, 12, 13, 14) disposed in parallel to one another in the flow direction of the liquid, each having an intake port (6, 6', 6") and brought together in the region of a liquid outlet (4) of the multiple injector (1) is used as the injector; an underpressure is brought about at the intake ports (6, 6', 6") of the chambers by the liquid flowing through the multiple injector (1), this underpressure aspirating in the ambient air via an intake port (6); and **in that** the undissolved components of the air are separated from the liquid introduced into the degassing unit (2) coming from the multiple injector (1) by vortexing the liquid in the degassing unit (2) designed correspondingly for this purpose, whereby still undissolved oxygen is aspirated out of the degassing unit (2) into the multiple injector (1) as a component of a gas-liquid mixture via an exhaust connection (9, 9') of the degassing unit (2) and a return line (18, 18') connecting this unit with the intake ports (6', 6") of a multiple injector (1) due to the underpressure at the intake ports (6', 6"), and is once again introduced into the liquid flowing through the multiple injector; whereas, lighter (when compared to oxygen), undissolved gas components of the air, i.e., essentially nitrogen, collecting in the upper part of the degassing unit (2) are discharged into the atmosphere via a gas discharge valve (15) of the degassing unit (2), and the liquid enriched with dissolved oxygen exits from a liquid outlet (8) of the degassing unit (2).

2. A device for enriching a liquid with oxygen, having at least one injector, in which the oxygen is introduced into the liquid as part of a gas mixture, i.e., the ambient air, and is dissolved in the liquid, and having at least one degassing unit (2) connected downstream to the at least one injector relative to the direction of flow of the liquid, wherein each injector has at least one liquid inlet (3), a liquid outlet (4), and an intake port (6, 6', 6"), and wherein each degassing unit (2) has at least one liquid inlet (7), which is connected via a connection line (5) to a liquid outlet (4) of an injector, and at least one liquid outlet (8) for the discharge of the liquid containing the oxygen dissolved therein, **characterised in that** the one or more injectors is (are) designed as a multiple injector (1) having at least two injector chambers (11, 12, 13, 14), which are disposed in parallel to one another in the direction of flow of the liquid and are brought together in the region of its liquid outlet (4), and each having an intake port (6, 6', 6"), and **in that** least one intake port (6) is disposed for aspirating in the ambient air, and at least one intake port (6', 6") is connected via a return line (18, 18') to an exhaust connection (9, 9') of the degassing unit (2) or to one of the degassing units (2), by means of which, still undissolved oxygen contained in the liquid is aspirated out of the related degassing unit (2) into the multiple injector (1) as a component of a gas-liquid mixture, wherein the liquid inlet (7) of the at least one degassing unit (2) is designed as a connection (16) opening tangentially into this unit, and the at least one degassing unit (2) has a gas discharge valve (15) in its upper region, for discharging undissolved gas components of the air that are collecting there and that are lighter than oxygen, i.e., essentially nitrogen.

3. The device according to claim 2, **characterised in that** the liquid outlet (8) of the at least one degassing unit (2) is designed as a connection (25) opening up tangentially into the degassing unit (2).

4. The device according to claim 2 or 3, **characterised in that** a pump (10) is disposed in the connection line (5) between the at least one multiple injector (1) and the at least one degassing unit (2), by means of which the liquid laden with dissolved and undissolved gas or gas mixture is introduced into the degassing unit (2) connected downstream to the multiple injector (1), so that the liquid introduced into the degassing unit (2) is additionally pressure-loaded for the separation of the undissolved gas components.

5. The device according to one of claims 2 to 4, **characterised in that** at least one injector chamber (13, 14) of the multiple injector (1) is connected via its intake port (6', 6") to an exhaust connection (9, 9') of a degassing unit (2), which is connected to the related multiple injector (1) also via a connection line (5) for the liquid laden with dissolved and undissolved gas components of the air.

6. The device according to one of claims 2 to 5, **characterised in that** at least one injector chamber (11, 12) of the multiple injector (1) has an intake port (6) for aspirating in ambient air, in which a non-return valve and a suction-prevention guard (24) are disposed therein.

7. The device according to one of claims 2 to 6, **characterised in that** the at least one degassing unit (2) is designed as a tube-shaped container, its diameter being widened in an upper segment, with an exhaust connection (9) connected to an intake port (6') of a multiple injector (1) as well as the gas discharge valve (15) being disposed in the head region thereof, and with another exhaust connection (9') connected to an intake port (6") of a multiple injector (1) being disposed in the foot region thereof, whereby, proceeding from the exhaust connection (9) disposed in the head region, a tube segment (17) extending below the liquid inlet (7) projects into the container of the degassing unit (2).

8. The device according to claim 7, **characterised in that** proceeding from the exhaust connection (9') disposed in the foot region, a tube segment (17') extending above the liquid outlet (8) projects into the container of the degassing unit (2).

## Revendications

1. Procédé d'enrichissement d'un liquide en oxygène, l'oxygène étant apporté dans le liquide au moyen d'un injecteur en tant que composant d'un mélange de gaz, à savoir l'air ambiant, et y étant partiellement dissous, le liquide quittant l'injecteur chargé en une fraction d'air dissoute et en une fraction d'air non dissoute étant apporté à une unité (2) de dégazage située en aval de l'injecteur pour éliminer la fraction de gaz non dissoute formant des bulles dans le liquide, **caractérisé en ce que**
le procédé utilise comme injecteur un injecteur multiple (1) qui présente au moins deux chambres d'injecteur (11, 12, 13, 14) disposées parallèlement l'une à l'autre dans la direction d'écoulement du liquide, présentant chacune une tubulure d'aspiration (6, 6', 6") et rassemblées au niveau d'une sortie de liquide (4) de l'injecteur multiple (1),
**en ce qu'**une dépression par laquelle l'air ambiant est aspiré par une tubulure d'aspiration (6) et la fraction d'air non dissoute est séparée du liquide apporté à l'unité de dégazage (2) en provenance de l'injecteur multiple (1) est provoquée sur la tubulure d'aspiration (6, 6', 6") par le liquide qui traverse l'injecteur multiple (1),
**en ce que** le liquide est tourbillonné dans l'unité de dégazage (2) configurée de manière à le permettre, l'oxygène non encore dissous et formant un composant d'un mélange de gaz et de liquide étant aspiré par un raccordement d'aspiration (9, 9') de l'unité de dégazage (2) et un conduit de retour (18, 18') qui relie ce raccordement d'aspiration à la tubulure d'aspiration (6', 6") d'un injecteur multiple (1) du fait de la dépression qui règne sur la tubulure d'aspiration (6', 6") hors de l'unité de dégazage (2) et dans cet injecteur multiple (1) et étant renvoyé de nouveau dans le liquide qui traverse ce dernier, tandis que la fraction non dissoute de l'air, plus légère que l'oxygène et se rassemblant dans la partie supérieure de l'unité de dégazage (2), à savoir essentiellement l'azote, étant évacuée dans l'atmosphère par une soupape (15) de sortie de gaz de l'unité de dégazage (2), le liquide enrichi en oxygène dissous sortant par une sortie de liquide (8) de l'unité de dégazage (2).

2. Dispositif d'enrichissement d'un liquide en oxygène, le dispositif présentant
au moins un injecteur dans lequel l'oxygène qui est un composant d'un mélange de gaz, à savoir l'air ambiant, est introduit dans le liquide et est dissous dans le liquide et
au moins une unité de dégazage (2) disposée en aval du ou des injecteurs dans la direction d'écoulement du liquide,
chaque injecteur présentant au moins une entrée de liquide (3), une sortie de liquide (4) et une tubulure d'aspiration (6, 6', 6''),
chaque unité de dégazage (2) présentant au moins une entrée de liquide (7) raccordée par un conduit de raccordement (5) à la sortie de liquide (4) d'un injecteur et au moins une sortie de liquide (8) qui délivre le liquide et l'oxygène qui y est dissous, **caractérisé en ce que**
le ou les injecteurs sont configurés comme injecteurs multiples (1) présentant au moins deux chambres d'injecteur (11, 12, 13, 14) disposées parallèlement l'une à l'autre dans la direction d'écoulement du liquide, rassemblées au niveau de sa sortie de liquide (4) et présentant chacune une tubulure d'aspiration (6, 6', 6"),
**en ce qu'**au moins une tubulure d'aspiration (6) est disposée de manière à aspirer l'air ambiant et au moins une tubulure d'aspiration (6', 6") est raccordée par un conduit de renvoi (18, 18') à un raccordement d'aspiration (9, 9') de l'unité de dégazage (2) ou de l'une de ces unités et aspire l'oxygène qui est un composant d'un mélange de gaz et de liquide et qui est contenu dans le liquide et non encore dissous hors de l'unité de dégazage (2) concernée jusque dans l'injecteur multiple (1),
**en ce que** l'entrée de liquide (7) de la ou des unités de dégazage (2) est configurée comme tubulure (16) qui y débouche tangentiellement et
**en ce que** pour extraire de l'air la fraction de gaz plus légère que l'oxygène et non dissoute qui s'y rassemble, à savoir essentiellement l'azote, la ou les unités de dégazage (2) présentent une soupape (15) de sortie de gaz dans sa partie supérieure.

3. Dispositif selon la revendication 2, **caractérisé en ce que** la sortie de liquide (8) de la ou des unités de dégazage (2) est configurée comme tubulure (25) débouchant tangentiellement dans l'unité de dégazage (2).

4. Dispositif selon les revendications 2 ou 3, **caractérisé en ce qu'**une pompe (10) par laquelle le liquide chargé en gaz dissous ou non dissous ou en mélange de gaz dissous ou non dissous est amené à l'unité de dégazage (2) située en aval de l'injecteur multiple (1) est disposée dans le conduit de raccordement (5) entre le ou les injecteurs multiples (1) et la ou les unités de dégazage (2), de telle sorte qu'une pression supplémentaire puisse être appliquée sur le liquide apporté à l'unité de dégazage (2) pour la séparation de la fraction de gaz non dissoute.

5. Dispositif selon l'une des revendications 2 à 4, **caractérisé en ce qu'**au moins une chambre (13, 14) de l'injecteur multiple (1) est raccordée par sa tubulure d'aspiration (6', 6") à un raccordement d'aspiration (9, 9') d'une unité de dégazage (2) qui est raccordée à l'injecteur multiple (1) concerné également par un conduit de raccordement (5) prévu pour le liquide chargé en fraction gazeuse dissoute ou non dissoute de l'air.

6. Dispositif selon l'une des revendications 2 à 5, **caractérisé en ce qu'**au moins une chambre (11, 12) de l'injecteur multiple (1) présente une tubulure d'aspiration (6) qui aspire l'air ambiant et dans laquelle une soupape anti-retour et un panier (24) de protection d'aspiration sont disposés.

7. Dispositif selon l'une des revendications 2 à 6, **caractérisé en ce que** la ou les unités de dégazage (2) sont configurées comme récipient tubulaire dont le diamètre s'évase dans la partie supérieure, et dans la partie de tête duquel un raccordement d'aspiration (9) raccordé à une tubulure d'aspiration (6') d'un injecteur multiple (1) et la soupape de sortie de gaz (15) sont disposés et dans la partie de pied duquel un autre raccordement d'aspiration (9') relié à une tubulure d'aspiration (6") d'un injecteur multiple (1) est disposé, une section tubulaire (17) qui s'étend jusqu'en dessous de l'entrée de liquide (7) débordant dans le récipient de l'unité de dégazage (2) en partant du raccordement d'aspiration (9) disposé dans la partie de tête.

8. Dispositif selon la revendication 7, **caractérisé en ce que** partant du raccordement d'aspiration (9') disposé au niveau du pied, une section tubulaire (17') qui s'étend jusqu'au-dessus de la sortie de liquide (8) pénètre dans le récipient de l'unité de dégazage (2).
